Europäisches Patentamt

European Patent Office

Office européen des brevets

(19)

(11) Veröffentlichungsnummer: **0 067 932**
**B1**

(12) # EUROPÄISCHE PATENTSCHRIFT

(45) Veröffentlichungstag der Patentschrift:
31.07.85

(51) Int. Cl.⁴: **A 47 J 31/54**

(21) Anmeldenummer: 82102975.8

(22) Anmeldetag: 07.04.82

(54) Durchlauferhitzer für elektrisch beheizte Geräte zur Herstellung von Aufgussgetränken.

(30) Priorität: 22.06.81 DE 3124449

(43) Veröffentlichungstag der Anmeldung:
29.12.82 Patentblatt 82/52

(45) Bekanntmachung des Hinweises auf die Patenterteilung:
31.07.85 Patentblatt 85/31

(84) Benannte Vertragsstaaten:
AT CH DE FR GB IT LI SE

(56) Entgegenhaltungen:
DE - A - 2 757 109
DE - B - 2 741 446

(73) Patentinhaber: ELPAG AG CHUR, Quaderstrasse 11,
CH-7001 Chur (CH)

(72) Erfinder: Bleckmann, Ingo, Dipl.-Ing. Dr.,
Ignaz-Rieder-Kai 11, A-5020 Salzburg (AT)

(74) Vertreter: Patentanwälte Liedl, Nöth,
Steinsdorfstrasse 21-22, D-8000 München 22 (DE)

## Beschreibung

Die Erfindung betrifft einen Durchlauferhitzer nach dem Oberbegriff des Anspruchs 1.

Bei derartigen Durchlauferhitzern, insbesondere für Kaffeemaschinen, ist es bekannt, seitlich neben einem hufeisenförmig gebogenen Wasserdurchlaufrohr einen ebenfalls hufeisenförmig gebogenen Rohrheizkörper anzuordnen, wobei der Rohrheizkörper sowohl seitlich mit dem Wasserdurchlaufrohr als auch an seiner Oberseite mit einer Abdeckplatte bzw. Warmhalteplatte für ein Aufgußvorratsgefäß in wärmeleitendem Kontakt steht. Um eine möglichst gut wärmeleitende Verbindung zwischen dem Wasserdurchlaufrohr und dem Rohrheizkörper zu erzielen, ist es z. B. aus der DE-A-2 741 446 bekannt, den Rohrheizkörper an das Wasserdurchlaufrohr anzuklammern und außerdem noch durch Löten Rohrheizkörper und Wasserdurchlaufrohr miteinander zu verbinden. Auf diese Weise läßt sich das für die Brühvorgang benötigte Heißwasser erzeugen, welches z. B. bei einer Kaffeemaschine durch das Filter mit dem Kaffeepulver geleitet wird, und nach Beendigung des Brühvorgangs läßt sich das fertige Aufgußgetränk, z. B. der Kaffee, durch die Warmhalteplatte, welche ebenfalls vom Rohrheizkörper an dessen Oberseite erwärmt wird, noch warmhalten.

Aus der DE-A-27 57 109 ist weiterhin ein Durchlauferhitzer für eine elektrische Kaffeemaschine bekannt, bei dem die dem Wasserrohr entlang seiner Länge pro Längeneinheit zugeführte Heizleistung in Anpassung an die Belastbarkeit des Wasser unterschiedlich ist. Ebenfalls kann entsprechend Unteranspruch 4 dieser Veröffentlichung der Wärmeübergang zwischen dem Rohrheizkörper und der Warmhalteplatte über die Länge des Wasserrohres unterschiedlich ausgeführt sein. Unter »unterschiedlich« im Sinne dieser Vorveröffentlichung ist dabei zu verstehen, daß die dem Wasserrohr pro Längeneinheit von dem Rohrheizkörper zugeführte Heizleistung gegen das Heißwasserende des Wasserrohres hin abnehmen soll. Der Kaltwasserbereich des Wasserrohres wird also stärker beheizt als der Heißwasserbereich. Im Kaltwasserbereich würde die Wasseroberfläche an der Rohrwandung eine wesentlich größere Wärmezufuhr ohne nennenswerte Dampfblasenbildung vertragen.

Je heißer das Wasser wird, um so mehr neigt es bei Zufuhr der gleichen Wärme zur Dampfblasenbildung, so daß eine ungleichmäßige Beheizung wohl einen längeren Durchlauferhitzer erfordert, jedoch zu einer gleichmäßigeren Förderung führt. Durch die schwächere Beheizung des Wasserrohres im Heißwasserbereich wird weiterhin eine geringere Kalkbildung erwartet.

Bei einer eingehenden Untersuchung der bekannten Ausführungsform ergab sich, daß die Filtrattemperatur in der auf der Warmhalteplatte abgestellten Kaffeekanne relativ niedrig, z. B. bei 60 bis 65°C lag. Erwünscht sind jedoch Filtrattemperaturen, die über lange Zeit, z. B. ein bis zwei Stunden, in der Größenordnung von 80°C konstant bleiben. Wenn im Kaltwasserbereich eine wesentlich größere Wärmemenge, z. B. die zwei- bis dreifache Wärmemenge von dem Rohrheizkörper auf das Wasserrohr übertragen wird, bedeutet dies, daß unabhängig von der jeweiligen Konstruktion in diesem Bereich eine wesentlich geringere Wärmemenge, nämlich ebenfalls eine um 2/3 geringere Wärmemenge, auf die Warmhalteplatte übertragen wird im Vergleich zu der Wärmeübertragung im Heißwasserbereich. Selbst wenn man — was in der Vorveröffentlichung nicht angeregt wird — die Konstruktion so treffen würde, daß im Heißwasserbereich eine Filtrattemperatur von 80°C erreicht wird — eine höhere Filtrattemperatur oder ein Kochen des Kaffees über lange Zeiträume ist unerwünscht —, dann wird im Kaltwasserbereich eine erheblich niedrigere Filtrattemperatur von z. B. nur 40—50°C erreicht, da ja nur 1/3 der Wärmemenge auf die Warmhalteplatte übertragen wird. Im Endergebnis ergibt sich dann eine gemittelte Filtrattemperatur von etwa 60°C, die nach den Vorstellungen der Kaffeemaschinenhersteller zu niedrig ist. Gemäß der vorliegenden Erfindung wird also die aus der Entgegenhaltung bekannte Lehre zum technischen Handeln abgelehnt und als nachteilig empfunden.

Bei der Herstellung geringer Kaffeemengen, z. B. von zwei Tassen, hat es sich herausgestellt, daß das im Endzustand in den Aufgußvorratsbehälter beispielsweise in die Kaffeekanne, gelangende Filtrat nicht die gewünschte Temperatur von etwa 80°C aufweist. Dies ist vermutlich darauf zurückzuführen, daß die geringe Heißwassermenge nicht ausreicht, um das aus dem Zuleitungsrohr, Filter, Kaffeepulver und Vorratsbehälter bestehende System ausreichend aufzuwärmen.

Aufgabe der Erfindung ist es, hier Abhilfe zu schaffen und einen Durchlauferhitzer nach dem Oberbegriff des Anspruchs 1 zu schaffen, mit dem die Herstellung geringer Mengen an Aufgußgetränk, z. B. von zwei Tassen Kaffee, bei der gewünschten Temperatur, etwa bei 80°C, gewährleistet wird.

Diese Aufgabe wird erfindungsgemäß gelöst durch die im Kennzeichen des Anspruchs 1 angegebenen Merkmale.

Durch die Erfindung wird gewährleistet, daß bereits bei Beginn des Brühvorgangs das Aufgußvorratsgefäß, insbesondere die Kaffeekanne, zumindest im Bodenbereich auf eine ausreichend hohe Temperatur erhitzt ist, so daß bereits die ersten kleinen Mengen des Aufgußgetränkes, die in den Vorratsbehälter gelangen und etwa eine Durchschnittstemperatur von 60°C aufweisen, durch den Vorratsbehälter auf die gewünschte Temperatur erhitzt werden. Dies wird ermöglicht dadurch, daß zwischen dem Rohrheizkörper und der Warmhalteplatte ein erhöhter Wärmeübergang geschaffen wird, der die Warmhalteplatte beispielsweise auf eine Temperatur von 100 bis 110°C bringt. Damit dient die Warmhalteplatte nicht nur, wie bei herkömmlichen Durchlauferhitzern, zum Warmhalten des fertigen Aufgußgetränkes bzw. des Kaffees, sondern bringt das Aufgußgetränk beim Brühvorgang und insbesondere schon zu Beginn des Brühvorgangs, auf die gewünschte Temperatur, z. B. auf etwa 80°C. Die Verbesserung des Wärmeübergangs vom Rohrheizkörper auf die Warmhalteplatte läßt sich dadurch erzielen, daß man im Gegensatz zu der herkömmlichen Bauweise der Durchlauferhitzer den Wärmeübergang zwischen dem Rohrheizkörper und dem Wasserrohr verringert. Hierbei wird sich zwar der Beginn des Brühvorgangs etwas verzögern, jedoch gewinnt man bei der Herstellung geringer Mengen von Aufgußgetränk den Vorteil, daß dieses im Vorratsbehälter die gewünschte Temperatur aufweist. Dies beruht darauf, daß man nicht wie bisher die Wärmeenergie des Rohrheizkörpers fast ausschließlich zur Erhitzung des Wassers im Wasserdurchlaufrohr verwendet, sondern gleichzeitig beim Brühvorgang einen erheblichen Teil der Wärmeenergie des Rohrheizkörpers direkt über die Warmhalteplatte dem Aufgußvorratsgefäß von außen zuführt.

Die Erfindung läßt sich bevorzugt bei Kleinkaffeemaschinen, insbesondere bei Zwei- bis Viertassen-Maschinen, anwenden.

Bei einem Ausführungsbeispiel gewinnt man gegenüber herkömmlichen Bauarten einerseits einen verringerten Wärmefluß vom Rohrheizkörper zum Wasserdurchlaufrohr und andererseits einen erhöhten Wärmefluß vom Rohrheizkörper zur Warmhalteplatte und zum Aufgußvorratsbehälter dadurch, daß für den gesamten, durch Wärmeleitung vermittelten Wärmeübergang vom Rohrheizkörper auf das Wasserdurchlaufrohr, die Warmhalteplatte die Wärmebrücke bildet, wobei in bevorzugter Weise der Teil der Warmhalteplatte zwischen dem Wasserdurchlaufrohr und dem Rohrheizkörper durch Ausnehmungen bzw. Löcher unterbrochen sein kann. Das Wasserdurchlaufrohr und der Rohrheizkörper weisen dabei über ihre gesamte Länge hin einen Abstand voneinander auf, der bevorzugterweise mindestens gleich dem halben Rohrheizkörperdurchmesser ist.

Eine Weiterbildung der Erfindung kann darin bestehen, daß das Wasserdurchlaufrohr außerhalb des Teils der Warmhalteplatte, auf dem der Aufgußvorratsbehälter aufsteht, an der Warmhalteplatte befestigt ist. Um zwischen der Warmhalteplatte und dem Aufgußvorratsbehälter einen möglichst guten Wärmeübergang zu gewährleisten, kann die Form der Warmhalteplatte an die Bodenaufstandsfläche des Aufgußvorratsbehälters angepaßt sein.

Anhand der Figuren, die Ausführungsbeispiele zeigen, wird die Erfindung noch näher erläutert. Es zeigt

Fig. 1 eine Kurvendarstellung des zeitlichen Temperaturverlaufs der Filtrattemperatur im Vorratsbehälter während des Brühvorgangs;

Fig. 2 ein Ausführungsbeispiel des Durchlauferhitzers von unten;

Fig. 3 eine Teilansicht des in der Fig. 2 gezeigten Durchlauferhitzers;

Fig. 4 eine Teilansicht eines weiteren Ausführungsbeispiels.

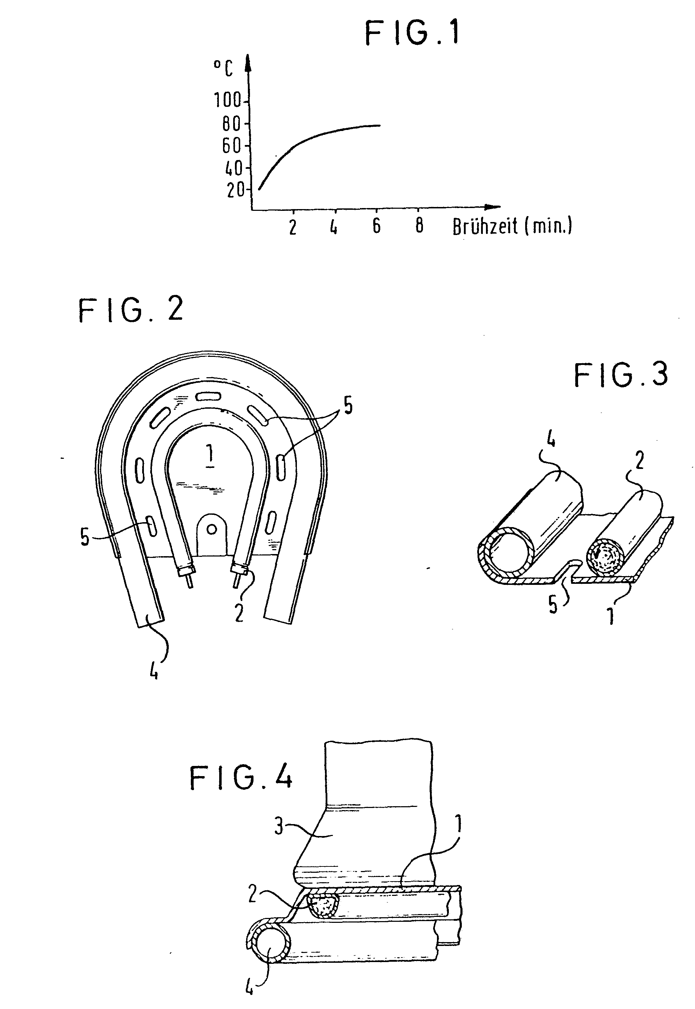

Wie aus der Fig. 1 zu ersehen ist, erreicht das Filtrat im Aufgußvorratsbehälter erst etwa nach vier Minuten Brühzeit die gewünschte Temperatur von etwa 80°C. Bei geringen herzustellenden Aufgußgetränkemengen ergibt sich daher der Nachteil, daß diese gewünschte Temperatur für das Aufgußgetränk im Vorratsbehälter in herkömmlicher Weise nicht erzielt werden kann.

Um zu gewährleisten, daß während des Brühvorgangs Wärmeenergie des Rohrheizkörpers direkt über die Warmhalteplatte dem Vorratsbehälter von außen in erhöhtem Maße zugeführt wird, ist bei der Erfindung, wie das Ausführungsbeispiel der Fig. 2 und 3 zeigt, ein Rohrheizkörper 2 im Abstand vom Wasserdurchlaufrohr 4 angeordnet.

Der Abstand beträgt mindestens die Hälfte des Durchmessers des Rohrheizkörpers 2. Der Rohrheizkörper 2 ist dabei direkt in gut wärmeleitendem Kontakt mit einer Warmhalteplatte 1, wobei die Anlagefläche des Rohrheizkörpers an der Unterseite der Warmhalteplatte 1 auch flächig sein kann. Hierzu kann der Rohrheizkörper 2 abweichend von der dargestellten runden Ausführungsform auch eine dreieckige oder viereckige oder sonstige Querschnittsform aufweisen. Ebenfalls an der Unterseite der Warmhalteplatte 1 ist der Rohrheizkörper 4 vorgesehen. Der Teil der Warmhalteplatte 1, welcher zwischen dem Rohrheizkörper 2 und dem Durchlaufrohr 4 sich befindet, dient als Wärmebrücke für den Wärmefluß vom Rohrheizkörper zum Wasserdurchlaufrohr. Um diesen Wärmefluß zu verringern, können Löcher 5 oder sonstige Ausnehmungen in diesem zwischen dem Wasserdurchlaufrohr 4 und dem Rohrheizkörper 2 liegenden Teil der Warmhalteplatte 1 vorgesehen sein.

Bei dem in der Fig. 4 dargestellten Ausführungsbeispiel befindet sich das Wasserdurchlaufrohr 4 außerhalb des Teils der Warmhalteplatte 1, auf welchem das Aufgußvorratsgefäß 3 aufsteht. Wie das Ausführungsbeispiel der Fig. 4 weiter zeigt, kann die Form der Warmhalteplatte 1 der Bodenaufstandsfläche des Vorratsgefäßes 3 angepaßt sein.

Durch die Erfindung wird somit ein Durchlauferhitzer geschaffen für ein elektrisch beheiztes Gerät zur Herstellung von Aufgußgetränken, insbesondere Kaffee, durch Aufbrühen, bei dem zwischen der Warmhalteplatte 1 und dem Rohrheizkörper 2 ein bevorzugter Wärmeübergang vorhanden ist, so daß während des Brühvorgangs die gewünschte Temperatur des im Aufgußvorratsgefäß 3 vorhandenen Aufgußgetränks nicht allein aus der Aufheizung des im Wasserdurchlaufrohr 4 erhitzten Wassers resultiert, sondern in erheblichem Umfang auch aus einem erhöhten Wärmeübergang von dem Rohrheizkörper 2 über die Warmhalteplatte 1 auf das Aufgußvorratsgefäß 3.

Die Warmhalteplatte 1 ist bei einer bevorzugten Ausführungsform als sogenannte »Dekorplatte« ausgebildet, d. h. bei der Endmontage des Gerätes bleibt sie frei sichtbar. Sie muß dementsprechend bestimmte Anforderungen erfüllen, also außer einer guten Wärmeleitfähigkeit eine Unempfindlichkeit gegen Reinigungsmittel, gutes Aussehen usw. Besonders bewährt hat sich Chromnickelstahl. Der Rohrheizkörper wird unmittelbar auf die Unterseite der Chromnickelstahlplatte aufgelötet — bei Geräten der in Rede stehenden Art eine neuartige Ausbildung.

## Patentansprüche

1. Durchlauferhitzer für elektrisch beheizte Geräte zur Herstellung von Aufgußgetränken durch Aufbrühen, bei dem ein Rohrheizkörper (2) und ein Wasserdurchlaufrohr (4) unterhalb einer Warmhalteplatte (1) angeordnet sind, auf welcher ein Aufgußvorratsgefäß (3) zur Aufnahme des Aufgußgetränkes abgestellt werden kann, wobei der Rohrheizkörper (2) sowohl zur Erwärmung der Warmhalteplatte (1) und des darauf abgestellten Aufgußvorratsgefäßes (3) als auch zur Erhitzung des Wassers im Wasserdurchlaufrohr (4) dient, dadurch gekennzeichnet, daß der Rohrheizkörper (2) die Warmhalteplatte (1) und das Wasserdurchlaufrohr (4) in einer solchen Weise angeordnet sind, daß der Wärmeübergang zwischen einerseits der Warmhalteplatte und dem Rohrheizkörper und andererseits zwischen dem Wasserdurchlaufrohr und dem Rohrheizkörper dazu führt, daß die dadurch erreichte Erhitzung der Warmhalteplatte (1) z. B. auf 100°C bis 110°C eine solche Temperatur des Bodens des Aufgußvorratsgefäßes (3) bewirkt, daß das Aufgußgetränk beim Brühvorgang und insbesondere schon zu Beginn des Brühvorganges durch das Aufgußvorratsgefäß (3) auf die gewünschte Temperatur, z. B. 80°C, gebracht wird, die höher ist als die Temperatur des beim Brühvorgang in das Aufgußvorratsgefäß (3) gelangenden Aufgußgetränkes.

2. Durchlauferhitzer nach Anspruch 1, dadurch gekennzeichnet, daß der Rohrheizkörper (2) über den größten Teil seiner Länge oder insgesamt im Abstand vom Wasserdurchlaufrohr (4) angeordnet ist und in direktem Wärmekontakt mit dem Teil der Warmhalteplatte (1) steht, auf dem der Aufgußvorratsbehälter (3) mit seinem Boden aufsteht.

3. Durchlauferhitzer nach Anspruch 1 oder 2, dadurch gekennzeichnet, daß für den gesamten, durch Wärmeleitung vermittelten Wärmeübergang vom Rohrheizkörper (2) auf das Wasserdurchlaufrohr (4) die Warmhalteplatte (2) die Wärmebrücke bildet.

4. Durchlauferhitzer nach einem der Ansprüche 1 bis 3, dadurch gekennzeichnet, daß das Wasserdurchlaufrohr (4) außerhalb des Teils der Warmhalteplatte (1), auf dem der Aufgußvorratsbehälter (3) aufsteht, an der Warmhalteplatte (1) befestigt ist.

5. Durchlauferhitzer nach einem der Ansprüche 1 bis 4, dadurch gekennzeichnet, daß die Form der Warmhalteplatte (1) an die Bodenaufstandsfläche des Aufgußvorratsbehälters (3) angepaßt ist.

6. Durchlauferhitzer nach einem der Ansprüche 1 bis 5, dadurch gekennzeichnet, daß der Bereich der Warmhalteplatte (1) zwischen dem Rohrheizkörper (2) und dem Wasserdurchlaufrohr (4) mit Ausnehmungen (5) versehen ist.

7. Durchlauferhitzer nach einem der Ansprüche 1 bis 6, dadurch gekennzeichnet, daß der Abstand zwischen dem Rohrheizkörper (2) und dem Wasserdurchlaufrohr (4) mindestens gleich dem halben Rohrheizkörperdurchmesser ist.

8. Durchlauferhitzer nach einem der Ansprüche 1 bis 7, dadurch gekennzeichnet, daß der Rohrheizkörper (2) unmittelbar an der Unterseite einer als Dekorplatte ausgebildeten Warmhalteplatte (1) angelötet ist, die vorzugsweise aus Chromnickelstahl besteht und deren Oberfläche nach der Endmontage des Gerätes frei sichtbar bleibt.

## Claims

1. A continuous flow heater for electrically heated appliances for preparing infusion beverages by brewing, said continuous flow heater having a tubular heater body (2), and a water flow pipe (4) arranged below a warming plate (1) adapted to have placed thereupon an infusion beverage storage vessel (3) for receiving the infusion beverage, said tubular heater body (2) serving to warm the warming plate (1) and the infusion beverage storage vessel (3) placed thereupon, as well as to heat the water in the water flow pipe (4), characterized in that the tubular heater body (2), the warming plate (1) and the water flow pipe (4) are arranged in such manner that as a consequence of the heat transfer between the warming plate and the tubular heater, on the one hand, and between the water flow pipe and the tubular heater, on the other hand, the heating of the warming plate achieved thereby, e. g. to 100°C to 110°C, causes the temperature of the bottom of the infusion beverage storage vessel (3) to be such that during the brewing operation and particularly already at the start of the brewing operation the infusion beverage ist brought by the infusion beverage vessel (3) to that desired temperature e. g. 80°C, which is higher than the temperature of the infusion beverage reaching the infusion beverage storage vessel (3) during the brewing operation.

2. A continuous flow heater according to claim 1, characterized in that the tubular heater body (2) is arranged so that the major portion of the length or the whole thereof is spaced from the water flow pipe (4) and is directly heat-contacted with that portion of the warmer plate (1) on which the infusion beverage storage vessel (3) stands on the bottom thereof.

3. A continuous flow heater according to claim 1 or 2, characterized in that the warming plate (1) forms the heat bridge for the entire heat being transferred by heat conduction from the tubular heater body (2) to the water flow pipe (4).

4. A continuous flow heater according to any one of claims 1 to 3, characterized in that the water flow pipe (4) is secured to the warmer plate (1) outside that portion of the warmer plate (1) on which the infusion beverage storage vessel (3) stands.

5. A continuous flow heater according to any one of claims 1 to 4, characterized in that the shape of the warmer plate (1) is conformed to the supporting bottom surface of the infusion beverage storage vessel (3).

6. A continuous flow heater according to any one of claims 1 to 5, characterized in that the region of the warmer plate (1) between the tubular heater body (2) and the water flow pipe (4) is provided with recesses (5).

7. A continuous flow heater according to any one of claims 1 to 6, characterized in that the spacing between the tubular heater body (2) and the water flow pipe (4) is at least equal to one half of the tubular heater body diameter.

8. A continuous flow heater according to any one of claims 1 to 7, characterized in that the tubular heater body (2) is directly brazed to the lower side of a warmer plate (1) designed as an ornamental plate, said warmer plate preferably consisting of chrome-nickel steel and the surface of said warmer plate remaining freely visible after the final assembly of the appliance.

**Revendications**

1. Chauffe-eau à écoulement libre pour appareils chauffés électriquement et destinés à la préparation de boissons par infusion, dans lequel un corps de chauffe tubulaire (2) et un conduit d'écoulement d'eau (4) sont disposés au-dessous d'une plaque chauffante (1) sur laquelle peut être placé un récipient (3) destiné à recueillir la boisson obtenue par infusion, le corps de chauffe tubulaire (2) servant tant au chauffage de la plaque chauffante (1) et du récipient (3) recueillant l'infusion placé sur cette dernière qu'au chauffage de l'eau dans le conduit d'écoulement d'eau (4), caractérisé en ce que le corps de chauffe tubulaire (2), la plaque chauffante (1) et le conduit d'écoulement d'eau (4) sont disposés de telle manière que la transmission de chaleur d'une part entre la plaque chauffante et le corps de chauffe tubulaire et d'autre part entre le conduit d'écoulement d'eau et le corps de chauffe tubulaire a pour effet que l'élévation ainsi obtenue de la température de la plaque chauffante (1), par exemple jusqu'à 100°C à 110°C, détermine une température suffisante du fond du récipient (3) recueillant l'infusion pour que la boisson recueillie se trouve portée au cours du processus d'infusion et notamment dès le début du processus d'infusion par l'intermédiaire du récipient (3) recueillant l'infusion à la température désirée, par exemple 80°, qui est supérieure à la température de la boisson entrant au cours du processus d'infusion dans le récipient (3) recueillant l'infusion.

2. Chauffe-eau à écoulement libre selon la revendication 1, caractérisé en ce que le corps de chauffe tubulaire (2) est disposé sur la majeure partie de sa longueur ou dans son ensemble à une certaine distance du conduit d'écoulement d'eau (4) et se trouve en contact thermique direct avec la partie de la plaque chauffante (1) sur laquelle le récipient (3) recueillant l'infusion est placé avec son fond.

3. Chauffe-eau à écoulement libre selon la revendication 1 ou 2, caractérisé en ce que pour l'ensemble de la transmission de chaleur, produite par conduction thermique, du corps de chauffe tubulaire (2) au conduit d'écoulement d'eau (4) la plaque chauffante (1) forme le pont de chaleur.

4. Chauffe-eau à écoulement libre selon l'une quelconque des revendications précédentes, caractérisé en ce que le conduit d'écoulement d'eau (4) est fixé à la plaque chauffante (1) à l'extérieur de la partie de la plaque chauffante (1) sur laquelle est placé le récipient (3) recueillant l'infusion.

5. Chauffe-eau à écoulement libre selon l'une quelconque des revendications précédentes, caractérisé en ce que la forme de la plaque chauffante (1) est adaptée à la surface de base du récipient (3) recueillant l'infusion.

6. Chauffe-eau à écoulement libre selon l'une quelconque des revendications précédentes, caractérisé en ce que la région de la plaque chauffante (1) située entre le corps de chauffe tubulaire (2) et le conduit d'écoulement d'eau (4) présente des évidements (5).

7. Chauffe-eau à écoulement libre selon l'une quelconque des revendications précédentes, caractérisé en ce que la distance entre le corps de chauffe tubulaire (2) et le conduit d'écoulement d'eau (4) est au moins égale à la moitié du diamètre du corps de chauffe tubulaire.

8. Chauffe-eau à écoulement libre selon l'une quelconque des revendications précédentes, caractérisé en ce que le corps de chauffe tubulaire (2) est fixé par brasage directement sur le dessous d'une plaque chauffante (1) réalisée sous forme de plaque décorative qui est de préférence en acier au chrome-nickel et dont la surface reste librement visible après le montage complet de l'appareil.

# FIG.1

# FIG. 2

# FIG.3

# FIG.4